# EUROPEAN PATENT APPLICATION

(11) **EP 4 659 559 A1**
(43) Date of publication of application: **10.12.2025**
(21) Application number: 25158712.7
(22) Date of filing: 19.02.2025
(51) Int. Cl.: A01D 34/00, G05D 1/241

(54) **IMPROVED NAVIGATION FOR A ROBOTIC LAWNMOWER WITH REGARDS TO WOODY PLANTS**

(30) Priority: 04.06.2024 SE 2450597
(71) Applicant: Husqvarna AB, 561 82 Huskvarna (SE)
(72) Inventor: Landin, Rickard, Huskvarna (SE); Bergdahl, Saga, Huskvarna (SE); Arvidsson, Simon, Huskvarna (SE)

(57) **Abstract**

The invention relates to a robotic lawnmower (100) arranged to operate in an outdoor operational area (205), the robotic lawnmower comprising a visual sensor (185), and wherein the robotic lawnmower is configured for detecting (410) an object (B) and determine that the object (B) is a woody plant based on an image received from the visual sensor (185), determining (420) an outer extension (310) of the woody plant (B), and then traversing (430) the outer extension (310) of the woody plant (B) traversal (t) towards an inner extension (320) to enable cutting grass also in the area between the outer (310) and inner (320) extensions.

## Description

### TECHNICAL FIELD

This application relates to a robotic lawnmower and a method for providing a more efficient cutting of grass, and in particular to a robotic lawnmower and a method for providing a more efficient cutting of grass in relation to woody plants.

### BACKGROUND

Automated or robotic lawnmowers are becoming increasingly more popular and so is the use of the robotic lawnmower in various types of operational areas. Such operational areas often include woody plants such as bushes or trees with low-hanging branches. The inventors have realized a problem in that such woody plants are detected by visual sensors as obstacles, and to avoid collision the robotic lawnmowers will turn away from such woody plants whereby the area under the foliage of the woody plant is not cut.

### SUMMARY

It is therefore an object of the teachings of this application to overcome or at least reduce those problems by providing a robotic lawnmower system comprising a robotic lawnmower arranged to operate in an outdoor operational area, and the robotic lawnmower comprising a visual sensor and a controller, wherein the controller is configured to detect an object and determine that the object is a woody plant based on an image received from the visual sensor, determine an outer extension of the woody plant, and then traverse the outer extension of the woody plant traversal towards an inner extension to enable cutting grass also in the area between the outer and inner extensions.

It is also an object of the teachings of this application to overcome the problems by providing a method for use in a robotic lawnmower system comprising a robotic lawnmower arranged to operate in an outdoor operational area, the robotic lawnmower comprising a visual sensor, and wherein the method comprises: detecting an object and determine that the object is a woody plant based on an image received from the visual sensor, determining an outer extension of the woody plant, and thentraversing the outer extension of the woody plant traversal towards an inner extension to enable cutting grass also in the area between the outer and inner extensions.

Further embodiments and aspects are as in the attached patent claims and as discussed in the detailed description.

Other features and advantages of the disclosed embodiments will appear from the following detailed disclosure, from the attached dependent claims as well as from the drawings. Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of the element, device, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention will be described in further detail under reference to the accompanying drawings in which:
Figure 1A shows a schematic view of the components of an example of a robotic lawnmower according to some example embodiments of the teachings herein;
Figure 2 shows a schematic view of a robotic lawnmower system according to some example embodiments of the teachings herein;
Figure 3A and 3B each shows a schematic view of a robotic lawnmower system according to some example embodiments of the teachings herein; and
Figure 4 shows a corresponding flowchart for a method according to some example embodiments of the teachings herein.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein. Like reference numbers refer to like elements throughout.

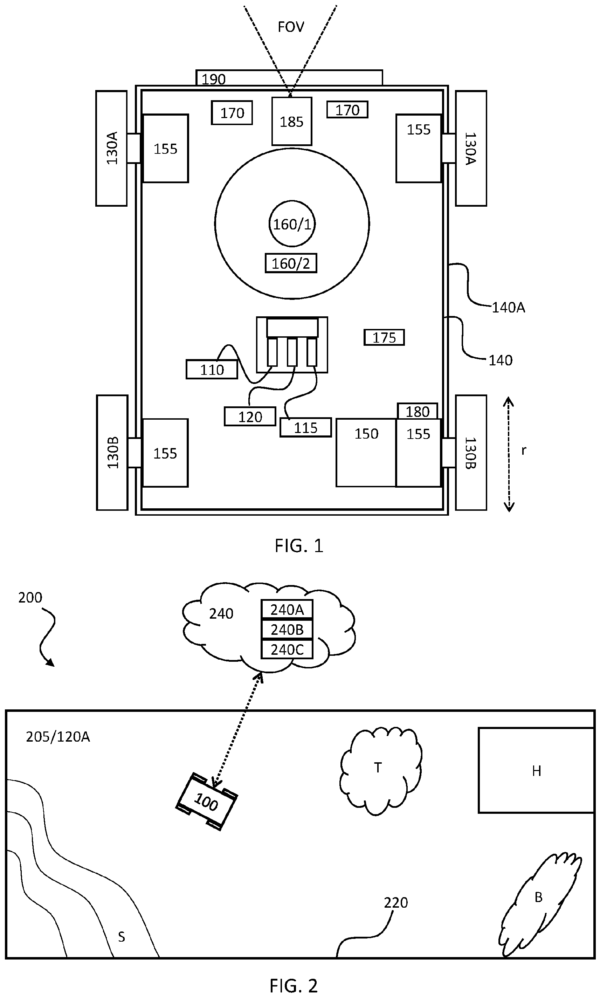

Figure 1A shows a schematic overview of a robotic lawnmower 100. The robotic lawnmower 100 may be a multi-chassis type or a mono-chassis type (as in figure 1A). A multi-chassis type comprises more than one main body parts that are movable with respect to one another. A mono-chassis type comprises only one main body part.

It should be noted that robotic lawnmower may be of different sizes, where the size ranges from merely a few decimetres for small garden robots, to even more than 1 meter for large robots arranged to service for example airfields.

It should also be noted that the robotic lawnmower is a self-propelled robotic lawnmower, capable of autonomous navigation within an outdoor operational area, where the robotic lawnmower propels itself across or around the outdoor operational area in a pattern (random or predetermined).

The robotic lawnmower 100 has a main body part 140, possibly comprising a chassis 140 and an outer shell 140A, and a plurality of wheels 130 (in this example four wheels 130, but other number of wheels are also possible, such as three or six).

The main body part 140 substantially houses all components of the robotic lawnmower 100. At least some of the wheels 130 are drivably connected to at least one electric motor 155 powered by a battery 150. It should be noted that even if the description herein is focused on electric motors, combustion engines may alternatively be used, possibly in combination with an electric motor. In the example of figure 1, each of the wheels 130 is connected to a common or to a respective electric motor 155 for driving the wheels 130 to navigate the robotic lawnmower 100 in different manners. The wheels, the motor 155 and possibly the battery 150 are thus examples of components making up a propulsion device. By controlling the motors 155, the propulsion device may be controlled to propel the robotic lawnmower 100 in a desired manner, and the propulsion device will therefore be seen as synonymous with the motor(s) 150. It should be noted that wheels 130 driven by electric motors is only one example of a propulsion system and other variants are possible such as caterpillar tracks.

The robotic lawnmower 100 also comprises a controller 110 and a computer readable storage medium or memory 120. The controller 110 may be implemented using instructions that enable hardware functionality, for example, by using executable computer program instructions in a general-purpose or special-purpose processor that may be stored on the memory 120 to be executed by such a processor. The controller 110 is configured to read instructions from the memory 120 and execute these instructions to control the operation of the robotic lawnmower 100 including, but not being limited to, the propulsion and navigation of the robotic lawnmower.

The controller 110 in combination with the electric motor 155 and the wheels 130 forms the base of a navigation system (possibly comprising further components) for the robotic lawnmower, enabling it to be self-propelled as discussed.

The controller 110 may be implemented using any suitable, available processor or Programmable Logic Circuit (PLC). The memory 120 may be implemented using any commonly known technology for computer-readable memories such as ROM, FLASH, DDR, or some other memory technology.

The robotic lawnmower 100 is further arranged with a wireless communication interface 115 for communicating with other devices, such as a server, a personal computer, a smartphone, the charging station, and/or other robotic lawnmowers. Examples of such wireless communication devices are Bluetooth^{®}, WiFi^{®} (IEEE802.11b), Global System Mobile (GSM) and LTE (Long Term Evolution), to name a few. The robotic lawnmower 100 may be arranged to communicate with a user equipment (not shown but will be regarded as being an example of a server, as an example of a connected device) as discussed in relation to figure 2 below for providing information regarding status, location, and progress of operation to the user equipment as well as receiving commands or settings from the user equipment. Alternatively or additionally, the robotic lawnmower 100 may be arranged to communicate with a server (referenced 240 in figure 2) for providing information regarding status, location, and progress of operation as well as receiving commands or settings.

The robotic lawnmower 100 also comprises a work tool 160, which in the example of the robotic lawnmower 100 is a grass cutting device 160, such as a rotating blade 160/2 driven by a cutter motor 160/1. In embodiments where the robotic lawnmower 100 is exemplified as an automatic grinder, the work tool 160 is a rotating grinding disc.

For enabling the robotic lawnmower 100 to navigate with reference to a wire, such as a boundary wire or a guide wire, emitting a magnetic field caused by a control signal transmitted through the wire, the robotic lawnmower 100 is, in some embodiments, configured to have at least one magnetic field sensor 170 arranged to detect the magnetic field and for detecting the wire and/or for receiving (and possibly also sending) information to/from a signal generator. In some embodiments, such a magnetic boundary is used to provide a border (not shown explicitly in figure 2, but deemed to be included in the boundary 220) enclosing an outdoor operational area (referenced 205 in figure 2).

In some embodiments the robotic lawnmower 100 comprises a satellite signal navigation sensor 175 configured to provide navigational information (such as position) based on receiving one or more signals from a satellite - possibly in combination with receiving a signal from a base station. In some embodiments the satellite navigation sensor is a GPS (Global Positioning System) device or other Global Navigation Satellite System (GNSS) device. In some embodiments the satellite navigation sensor 175 is a RTK sensor. This enables the robotic lawnmower to operate in an outdoor operational area bounded by a virtual border (not shown explicitly in figure 2 but deemed to be included in the boundary 220 irrespective whether a physical boundary is used or not).

The robotic lawnmower 100 also comprises deduced reckoning sensors 180. The deduced reckoning sensors may be odometers, accelerometers or other deduced reckoning sensors.

The robotic lawnmower comprises a visual sensor 185, possibly comprised in or connected to the deduced reckoning sensors 180 as a visual odometry sensor. In some embodiments, the visual sensor is a stereo-camera 185, wherein stereo relates to a camera having two Field-Of-Views (FOV). Such cameras have the benefit of being able to determine a distance to an object in the field of View. In some embodiments, the visual sensor is a mono-camera 185, wherein mono relates to a camera having a single Field-Of-View (FOV) in contrast to a stereo camera. Such cameras have the benefit of being cheap.

In some embodiments, the deduced reckoning sensors are comprised in the propulsion device, wherein a deduced reckoning navigation may be provided by knowing the current supplied to a motor and the time the current is supplied, which will give an indication of the speed and thereby distance for the corresponding wheel.

The deduced reckoning sensors 180, especially in combination with the visual odometry sensor 185, enables the robotic lawnmower to operate according to a map of the outdoor operational area. In some such embodiments, the navigation is based on SLAM, and in some embodiments, where a visual odometry sensor (such as a camera) 185 is utilized, the navigation is based on V-SLAM.

In some embodiments, the robotic lawnmower 100 also comprises one or more collision sensors 190 that enable the robotic lawnmower 100 to detect when the robotic lawnmower 100 has run into, i.e collided with, an object. Such collision sensors are known in the art and will not require more detail. One type of collision sensor is mechanical sensors, where a sensor body comes into physical contact whereby for example a hall sensor reacts to a magnet being displaced. Another type of collision sensor is based on distance determining, such as optical sensors, time of flight (ToF) sensors, LIDAR sensors or RADAR sensors, whereby a collision is registered when a distance to the object falls below a safety distance (i.e. the robotic lawnmower comes to close to the object).

The robotic lawnmower 100 is in some embodiments arranged to operate according to a map application (indicated in figure 2 and referenced 120A) representing one or more operational areas (and possibly the surroundings of the outdoor operational area(s)) as well as features of the outdoor operational area(s) stored in the memory 120 of the robotic lawnmower 100. In some embodiments, the map is also or alternatively stored in the memory of a server (referenced 240 in figure 2). The map application may be generated or supplemented as the robotic lawnmower 100 operates or otherwise moves around in the outdoor operational area. In some embodiments, the map application is downloaded, possibly from the server. In some embodiments, the map application also includes one or more transport areas. The robotic lawnmower 100 is arranged to navigate according to the map based on the deduced reckoning sensors 180 and/or the satellite navigation sensors 175.

In some embodiments the robotic lawnmower is arranged or configured to traverse and operate in outdoor operational areas that are not essentially flat, but contain terrain that is of varying altitude, such as undulating, comprising hills or slopes or such. The ground of such terrain is not flat and it is not straightforward how to determine an angle between a sensor mounted on the robotic lawnmower and the ground. The robotic lawnmower is also or alternatively arranged or configured to traverse and operate in an outdoor operational area that contains obstacles that are not easily discerned from the ground. Examples of such are grass or moss-covered rocks, roots or other obstacles that are close to ground and of a similar colour or texture as the ground.

The outdoor operational area may contain obstacles that are overhanging, i.e. obstacles that may not be detectable from the ground up, such as low hanging branches of trees or bushes. Such a garden is thus not simply a flat lawn to be mowed, but an outdoor operational area of unpredictable structure and characteristics. The outdoor operational area exemplified with referenced to figure 2, may thus be such a nonuniform operational area as disclosed in this paragraph that the robotic lawnmower is arranged to traverse and/or operate in.

Figure 2 shows a robotic lawnmower system 200 in some embodiments. The schematic view is not to scale. The robotic lawnmower system 200 comprises one or more robotic lawnmowers 100 according to the teachings herein arranged to operate in one or more outdoor operational areas 205 possibly bounded by a boundary 220. It should be noted that the outdoor operational area 205 shown in figure 2 is simplified for illustrative purposes.

The view of the outdoor operational area 205 is also intended to be an illustration or graphical representation of the map application 120A discussed in the above.

A server 240 is shown as an optional connected device for the robotic lawnmower 100 to communicate with - possibly for receiving maps or map updates. The server 240 comprises a controller 240A for controlling the operation of the server 240, a memory 240B for storing instructions and data relating to the operation of the server 240 and a communication interface 240C for enabling the server 240 to communicate with other entities, such as the robotic lawnmower 100, and/or a User Equipment such as a mobile phone. The controller, the memory and the communication interface may be of similar types as discussed in relation to figure 1 for the robotic lawnmower 100.

As is shown in figure 2 there may be obstacles such as houses (H), structures, trees (T), bushes (B) to mention a few examples in the outdoor operational area 205. In figure 2 such obstacles are indicated and referenced H (as in house), trees (T), bushes (B) and slopes (S) as examples of obstacles and irregularities.

It should be noted that any processing may be done in any, some or all of the controller 110 of the robotic lawnmower 100 and/or the controller 240A of the server 240 and that the processing may also be done partially in one controller 110/240A for supplemental processing in the other controller 110/240A. This is indicated in figure 2A in that a dashed arrow is shown between the server 240 and the robotic lawnmower 100 for indicating that information may be passed freely between them for (partial) processing.

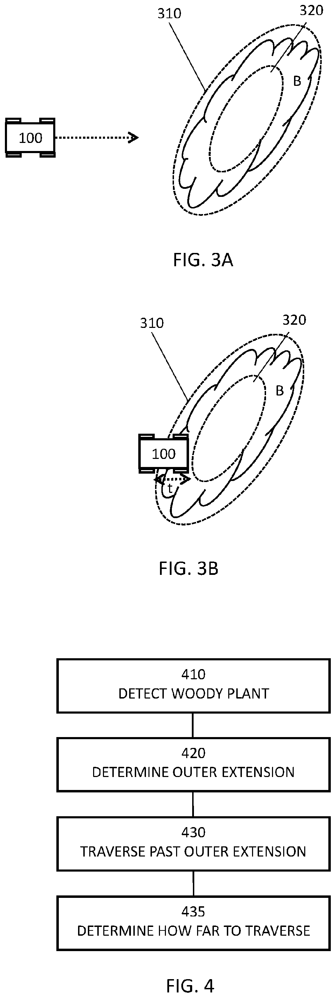

As discussed in the above, the robotic lawnmower 100 may be put to operate in an outdoor operational area that includes woody pants, for example bushes, or other objects that have an outer perceivable extension that is not representative of an inner and fixed extension, for example trees with low-hanging branches. In the following simultaneous reference will be given to figure 4 showing a flowchart for a general method for performing the teachings herein in a robotic lawnmower 100.

Figure 3A shows an example of a robotic lawnmower 100 approaching such a bush B. As the robotic lawnmower 100 approaches the bush it detects 410 an object (the bush) and determines that the object is a bush B.

A bush is herein taken as an example of a woody plant, wherein bushes, shrubs and trees are all examples of woody plants. The terminology of woody plants is well-known in the field of plants, and one possible definition is that woody plants are usually trees, shrubs, bushes or lianas whose stems and larger roots are reinforced with wood produced from secondary xylem. The main stem, larger branches, and roots of these plants are usually covered by a layer of bark. Wood is a structural tissue that allows woody plants to grow from above ground year after year.

The detection and determination is in some embodiments performed through receiving an image from the visual sensor 185, performing image analysis, including segmentation and object detection, thereby detecting the obstacle, and also - in some embodiments - identifying the type of obstacle. In some embodiments, the object detection is performed utilizing a neural network trained to determine woody plants and also to classify an object as not a woody plant, whereby the robotic lawnmower is not enabled to traverse the outer extension, i.e. it will turn back again from the outer extension and not pass over/through it. The type of woody plant is, in some embodiments, one of bush or tree. In further such embodiments, the type also indicates the type of tree or bush (i.e. the species). It should be noted that the object detection may also detect an object as another type of object, for example a fence or a house (H).

As part of the object detection or following the object detection, an outer extension 310 is determined 420. The outer extension is how far the woody plant extends, for example the foliage. In some embodiments the outer extension is determined based on a perceivable (visually detected) outer shell or shape of the visually detected object. In some such embodiments the outer extension 310 is determined based on the visually detected shape plus an allowed minimum distance. In some embodiments the allowed passing distance is 10, 15, 20, 25, 50 or 75 cms or in any range therein between. In some embodiments the allowed passing distance is based on the length of the robotic lawnmower, for example 25%, 50%, 75% or 100% or in any range therein between. In some embodiments the allowed passing distance exceeds the length of the robotic lawnmower.

In some embodiments, the same determination of the outer extension may be performed for all detected objects, not only bushes (or trees), but the description herein will focus on the detection of objects being bushes (or trees).

As noted above, the inventors have realized a problem in outdoor environments such as gardens that there is a problem in that there may be grass or other vegetation also under the branches or foliage of a bush (or tree) that will remain unserviced as the robotic lawnmower 100 will turn away from the bush as the outer foliage is reached. There is thus an area between the outer extension 310 and an inner (fixed) extension 320 that will remain unserviced. The inner extension is the extension of the stems and such of the bush (or tree) that is not visible - or only partially visible - from outside the bush, at least from the perspective of the robotic lawnmower 100.

The robotic lawnmower 100 is therefore configured to traverse 430 (as in to go or travel across or over) the outer extension 310 to enable grass cutting also in the area between the outer 310 an inner 320 extensions.

The robotic lawnmower 100 will thus go beyond a safety distance, i.e. the allowed minimum distance normally assigned to detected objects, thereby subjecting the robotic lawnmower to an increased risk of getting stuck or suffering some other damage to the hull. The traverse of the outer extension thus goes against prevailing thinking and understanding of safety requirements for robotic lawnmowers, however, as the inventors have realized, the increase in risk is insignificant as there is negligible risk of negligible hard collision, negligible risk of humans getting hurt, and negligible risk of any other affliction than a few scratches to the upper hull of the robotic lawnmower.

The traversal of the outer extension is in some embodiments defined as the distance that the robotic lawnmower 100 is allowed to travel past the outer extension before it is to turn back.

As mentioned above, the robotic lawnmower is in some embodiments configured to not only identify the object as a bush (or other woody plant), but to also identify the type of bush (or other woody plant) and the type indicates how far away over the outer extension that the robotic lawnmower can traverse. For example, one type of woody plant will allow the robotic lawnmower to travel 0.25 m past the outer extension, while another type of plant, will allow the robotic lawnmower to travel 1 m past the outer extension. The traversal is thus, in some embodiments, determined based on the type of woody plant, wherein some types of woody plants will allow for a longer traversal than other types. For example, a weeping willow will allow for a longer traversal than a fir.

Returning to how the outer extension is determined, the teachings herein present a few alternatives for how this can be done, and it should be noted that any, some or all of these manners may be combined, especially to be an alternative or combined with the determination of the outer extension as part of the object detection as discussed above.

In some embodiments the robotic lawnmower is configured to determine that it has reached the outer extension 310 by detecting or determining a distance to the object and then determining when this distance has been travelled.

In some embodiments, the distance may be determined based on the visual sensor 185. The visual sensor 185 being a stereo camera sensor can provide the distance directly. The distance may also be determined through object detection or other image analysis in the image feed from the visual sensor. In some embodiments, the image analysis is performed utilizing a neural network trained to determine distances. In some such embodiments the neural network is trained to make the distance measurement based on a fuse of camera + Time of Flight, Radar and/or Lidar sensors.

In some embodiments, the distance may be determined based on assigning a point in an image and then determine when that point is passed based on further image analysis on image feed from the visual sensor 185.

In some embodiments, the distance is determined indirectly, and possibly also that the outer extension 310 has been reached, based on further image analysis on an image feed from the visual sensor 185 simply by determining when the outer extension is reached based on the images.

As is mentioned above, the robotic lawnmower 100 is enabled to traverse the outer extension, i.e. to simply drive through the foliage. The distance that the robotic lawnmower 100 is allowed to traverse is also referred to herein as the traversal.

The traversal can be determined 435 in a number of manners that will be discussed in the below. It should be mentioned that any, some or all of these manners may be combined.

In some embodiments, the traversal is determined by utilizing a collision sensor 190 and to allow the robotic lawnmower 100 to continue until a collision is detected (or determined to be imminent as in falling below the allowed minimum distance). In some such embodiments, the allowed minimum distance is adapted to be negative therefor allowing the robotic lawnmower to drive through the outer extension (i.e the foliage). In some alternative or additional such embodiments, the sensitivity of the collision sensor is adapted to allow the robotic lawnmower 100 to drive through the outer extension (foliage) which assumingly gives way as the robotic lawnmower 100 drives through it. The sensitivity is thus adapted to a higher impact threshold for determining a collision.

In some embodiments, the traversal is determined by the visual sensor 185 and to allow the robotic lawnmower 100 to continue until the visual sensor provides information that the stem (or other object), i.e. the inner extension 320, has been reached. The information is provided through an image stream being analysed.

In an alternative (or additional) embodiment where the visual sensor 185 is utilized is where the image feed is analysed to determine the surface in the area between the outer and inner extensions. If the surface is determined to be grass, the robotic lawnmower is allowed to continue. The determination of whether there is grass or dirt/soil on the surface is in some embodiments performed utilizing image processing. The determination of whether there is grass or dirt/soil on the surface is in some embodiments performed utilizing a neural network (or other machine learning algorithm).

In some embodiments, the traversal is determined by the deduced reckoning sensor 180 being utilized to detect resistance on the wheels as the outer extension is reached, to determine if the resistance increases or decreases (for example by more than a predefined amount) and if so turn back out again. An increase in resistance indicates a rougher terrain, and a decrease in resistance indicates a looser terrain (slipping), both indicating that the robotic lawnmower 100 should back out.

In some embodiments, the traversal is determined as a predetermined distance, for example 0.25, 0.5, 1 m or in any range there-in-between. In some embodiments, the traversal is determined based on the type of woody plant, as discussed above. In some embodiments the traversal is determined based on a height of the woody plant. In some such embodiments, the height of the woody plant is determined utilizing the visual sensor through image analysis. In some such embodiments the height is the actual height of the woody plant. In some such embodiments the height is the height of an under edge of the woody plant to the ground. The higher the height, the longer the traversal.

In some embodiments, the robotic lawnmower 100 is configured to adapt its speed when traversing the outer extension 310. The adaptation is in some embodiments to slow down, and in some embodiments to slow down the further in the robotic lawnmower travels. In some embodiments, the robotic lawnmower 100 is configured to adapt its speed based on the type of woody plant where a first type of woody plant provided for a first adapted speed and a second type of woody plant provided for a second adapted speed.

In some embodiments, the robotic lawnmower 100 is configured to adapt its heading when traversing the outer extension 310, so that the robotic lawnmower traverses the outer extension at an angle significantly different than the normal to the outer extension, which reduces the risk of the robotic lawnmower getting stuck on a root, and/also increases the navigational possibilities to get free if it was to get stuck. In some embodiments the angle is 90, 80, 75, 70, 60, 45 degrees or in any range there-in-between from the normal to the outer extension 310 (at the point where the woody plant would be reached if the robotic lawnmower continued straight from when detecting the woody plant).

Figure 3B shows how the robotic lawnmower 100 has traversed past the outer extension 310 a distance (traversal) t towards the inner extension 320.

As the traversal has been reached, the robotic lawnmower 100 turns back out again. The robotic lawnmower can turn back out again by turning and travelling out again, and/or by reversing out.

Figure 4 shows a flowchart for a general method according to herein. The method is for use in a robotic lawnmower as in figure 1 in a manner as discussed above in relation to figures 2, 3A and 3B, namely for use in a robotic lawnmower system comprising a robotic lawnmower 100 arranged to operate in an outdoor operational area 205, the robotic lawnmower comprising a visual sensor 185. The method comprises a controller of the robotic lawnmower detecting 410 an object B and determine that the object B is a woody plant based on an image received from the visual sensor 185, determining 420 an outer extension 310 of the woody plant B, and then traversing 430 the outer extension 310 of the woody plant B traversal t towards an inner extension 320 to enable cutting grass also in the area between the outer 310 and inner 320 extensions.

### EXAMPLES:

1. A robotic lawnmower system comprising a robotic lawnmower (100) arranged to operate in an outdoor operational area (205), and the robotic lawnmower comprising a visual sensor (185) and a controller (110), wherein the controller is configured to
   detect (410) an object (B) and determine that the object (B) is a woody plant based on an image received from the visual sensor (185),
   determine (420) an outer extension (310) of the woody plant (B), and then
   traverse (430) the outer extension (310) of the woody plant (B) traversal (t) towards an inner extension (320) to enable cutting grass also in the area between the outer (310) and inner (320) extensions.
2. The robotic lawnmower system (300) according to example 1, wherein the traversal (t) of the outer extension is a distance that the robotic lawnmower (100) is allowed to travel past the outer extension (310) before it is to turn back out.
3. The robotic lawnmower system (300) according to any preceding example, wherein the controller (110) is further configured to adapt its speed when traversing the outer extension (310).
4. The robotic lawnmower system (300) according to example 3, wherein the controller (110) is further configured to slow down the further in past the outer extension the robotic lawnmower (100) travels.
5. The robotic lawnmower system (300) according to any preceding example, wherein the controller (110) is further configured to further configured to adapt its heading when traversing the outer extension (310), so that the robotic lawnmower traverses the outer extension at an angle different than the normal to the outer extension (310).
6. The robotic lawnmower system (300) according to any preceding example, wherein the image analysis includes segmentation and object detection.
7. The robotic lawnmower system (300) according to any preceding example, wherein the controller (110) is further configured to identify the type of woody plant, wherein the type indicates how far past the outer extension (310) that the robotic lawnmower (100) can traverse.
8. The robotic lawnmower system (300) according to any preceding example, wherein the controller (110) is further configured to determine the outer extension (310) based on a perceivable outer shape of the detected woody plant.
9. The robotic lawnmower system (300) according to example 5, wherein the controller (110) is further configured to determine the outer extension (310) is determined based on the visually detected shape plus an allowed minimum distance.
10. The robotic lawnmower system (300) according to any preceding example, wherein the controller (110) is further configured to determine that the robotic lawnmower (100) has reached the outer extension (310) by detecting a distance to the woody plant and then determining when this distance has been travelled.
11. The robotic lawnmower system (300) according to example 10, wherein the controller (110) is further configured to determine the distance to the woody plant based on the visual sensor (185) being a stereo camera sensor providing the distance.
12. The robotic lawnmower system (300) according to example 10 or 11, wherein the controller (110) is further configured to determine the distance to the woody plant through object detection utilizing a neural network trained to determine distances.
13. The robotic lawnmower system (300) according to example 10, 11 or 12, wherein the controller (110) is further configured to determine the distance to the woody plant by assigning a point in an image and then determine when that point is passed based on further image analysis on an image feed from the visual sensor (185).
14. The robotic lawnmower system (300) according to any preceding example, wherein the controller (110) is further configured to determine that the outer extension is reached based on the images based on further image analysis on an image feed from the visual sensor (185).
15. The robotic lawnmower system (300) according to any preceding example further comprising a collision sensor (190), wherein the controller (110) is further configured to
   determine the traversal is determined by utilizing the collision sensor (190) and to allow the robotic lawnmower (100) to continue until a collision is detected.
16. The robotic lawnmower system (300) according to example 15, wherein the controller (110) is further configured to adapt a sensitivity of the collision sensor to allow the robotic lawnmower (100) to drive through the outer extension (310).
17. The robotic lawnmower system (300) according to any preceding example, wherein the controller (110) is further configured to determine the traversal utilizing the visual sensor (185) to allow the robotic lawnmower (100) to continue until the visual sensor (185) provides information that the inner extension (320) has been reached.
18. The robotic lawnmower system (300) according to any preceding example, wherein the controller (110) is further configured to determine a surface in the area between the outer and inner extensions the visual sensor (185) is utilized is where the image feed is analysed to determine, and when the surface is determined to be grass, the robotic lawnmower (100) is allowed to continue towards the inner extension (310).
19. The robotic lawnmower system (300) according to any preceding example, wherein the controller (110) is further configured to determine the traversal by
   utilizing the deduced reckoning sensor (180) to detect a resistance on a wheel (130) of the robotic lawnmower (100) as the outer extension is reached,
   determining that the resistance increases or decreases by more than a predefined amount and if so turn back out.
20. The robotic lawnmower system (300) according to any preceding example, wherein the controller (110) is further configured to determine the traversal as a predetermined distance.
21. The robotic lawnmower system (300) according to any preceding example, wherein the controller (110) is further configured to determine a height of the woody plant and to determine the traversal based on the height of the woody plant.
22. A method for use in a robotic lawnmower system comprising a robotic lawnmower (100) arranged to operate in an outdoor operational area (205), the robotic lawnmower comprising a visual sensor (185), and wherein the method comprises:
   detecting (410) an object (B) and determine that the object (B) is a woody plant based on an image received from the visual sensor (185),
   determining (420) an outer extension (310) of the woody plant (B), and then
   traversing (430) the outer extension (310) of the woody plant (B) traversal (t) towards an inner extension (320) to enable cutting grass also in the area between the outer (310) and inner (320) extensions.

## Claims

1. A robotic lawnmower system comprising a robotic lawnmower (100) arranged to operate in an outdoor operational area (205), and the robotic lawnmower comprising a visual sensor (185) and a controller (110), wherein the controller is configured to
detect (410) an object (B) and determine that the object (B) is a woody plant based on an image received from the visual sensor (185),
determine (420) an outer extension (310) of the woody plant (B), and then
traverse (430) the outer extension (310) of the woody plant (B) traversal (t) towards an inner extension (320) to enable cutting grass also in the area between the outer (310) and inner (320) extensions.

2. The robotic lawnmower system (300) according to claim 1, wherein the traversal (t) of the outer extension is a distance that the robotic lawnmower (100) is allowed to travel past the outer extension (310) before it is to turn back out.

3. The robotic lawnmower system (300) according to any preceding claim, wherein the controller (110) is further configured to adapt its speed when traversing the outer extension (310).

4. The robotic lawnmower system (300) according to any preceding claim, wherein the controller (110) is further configured to further configured to adapt its heading when traversing the outer extension (310), so that the robotic lawnmower traverses the outer extension at an angle different than the normal to the outer extension (310).

5. The robotic lawnmower system (300) according to any preceding claim, wherein the image analysis includes segmentation and object detection.

6. The robotic lawnmower system (300) according to any preceding claim, wherein the controller (110) is further configured to identify the type of woody plant, wherein the type indicates how far past the outer extension (310) that the robotic lawnmower (100) can traverse.

7. The robotic lawnmower system (300) according to any preceding claim, wherein the controller (110) is further configured to determine the outer extension (310) based on a perceivable outer shape of the detected woody plant.

8. The robotic lawnmower system (300) according to any preceding claim, wherein the controller (110) is further configured to determine that the robotic lawnmower (100) has reached the outer extension (310) by detecting a distance to the woody plant and then determining when this distance has been travelled.

9. The robotic lawnmower system (300) according to any preceding claim, wherein the controller (110) is further configured to determine that the outer extension is reached based on the images based on further image analysis on an image feed from the visual sensor (185).

10. The robotic lawnmower system (300) according to any preceding claim further comprising a collision sensor (190), wherein the controller (110) is further configured to
determine the traversal is determined by utilizing the collision sensor (190) and to allow the robotic lawnmower (100) to continue until a collision is detected.

11. The robotic lawnmower system (300) according to claim 10, wherein the controller (110) is further configured to adapt a sensitivity of the collision sensor to allow the robotic lawnmower (100) to drive through the outer extension (310).

12. The robotic lawnmower system (300) according to any preceding claim, wherein the controller (110) is further configured to determine the traversal utilizing the visual sensor (185) to allow the robotic lawnmower (100) to continue until the visual sensor (185) provides information that the inner extension (320) has been reached.

13. The robotic lawnmower system (300) according to any preceding claim, wherein the controller (110) is further configured to determine a surface in the area between the outer and inner extensions the visual sensor (185) is utilized is where the image feed is analysed to determine, and when the surface is determined to be grass, the robotic lawnmower (100) is allowed to continue towards the inner extension (310).

14. The robotic lawnmower system (300) according to any preceding claim, wherein the controller (110) is further configured to determine the traversal by
utilizing the deduced reckoning sensor (180) to detect a resistance on a wheel (130) of the robotic lawnmower (100) as the outer extension is reached,
determining that the resistance increases or decreases by more than a predefined amount and if so turn back out.

15. A method for use in a robotic lawnmower system comprising a robotic lawnmower (100) arranged to operate in an outdoor operational area (205), the robotic lawnmower comprising a visual sensor (185), and wherein the method comprises:
detecting (410) an object (B) and determine that the object (B) is a woody plant based on an image received from the visual sensor (185),
determining (420) an outer extension (310) of the woody plant (B), and then
traversing (430) the outer extension (310) of the woody plant (B) traversal (t) towards an inner extension (320) to enable cutting grass also in the area between the outer (310) and inner (320) extensions.
